# EUROPÄISCHE PATENTSCHRIFT

(11) **EP 4 041 614 B1**
(45) Veröffentlichungstag und Bekanntmachung des Hinweises auf die Patenterteilung: **15.01.2025**
(21) Anmeldenummer: 21705479.0
(22) Anmeldetag: 12.02.2021
(51) Int. Cl.: B62B 3/14, B62B 5/00, G06F 3/147, G06Q 30/0601

(54) **EINKAUFSWAGEN**
SHOPPING TROLLEY
CHARIOT DE COURSES

(30) Priorität: 13.02.2020 DE 102020103760
(43) Veröffentlichungstag der Anmeldung: 17.08.2022
(73) Patentinhaber: Wanzl GmbH & Co. KGaA, 89340 Leipheim (DE); AIT Goehner GmbH, 70182 Stuttgart (DE)
(72) Erfinder: RUF, Tobias, 89331 Burgau (DE); KRÖNES, Michael, 89331 Burgau (DE); DAMINGER, Johann, 89223 Neu-Ulm, Burlafingen (DE); GASCHE, Thomas, 89340 Leipheim (DE); GAUCH, Michael, 70499 Stuttgart (DE)
(86) Internationale Anmeldenummer: PCT/EP2021/053397
(87) Internationale Veröffentlichungsnummer: WO 2021/160772

(56) Entgegenhaltungen:
- CN-A- 108 596 736
- DE-A1- 102017 104 407
- GB-A- 2 522 291

## Beschreibung

Die vorliegende Erfindung betrifft eine Schiebegriffeinheit eines Einkaufswagens, um Waren, die von einem Benutzer gekauft werden, zu scannen und letzten Endes zu bezahlen.

Im Stand der Technik ist bekannt, einen Scanner an einem Einkaufswagen anzuordnen. Beispielsweise zeigt die US 2011036907A einen Scanner, der in das Innere eines Einkaufswagens weist. Hierdurch können automatisch die in dem Einkaufswagen aufgenommenen Waren gescannt werden. Die CN 207931760U beschreibt einen Einkaufswagen in dessen Schiebegriffeinheit ein Scanner integriert ist. Das Dokument CN 208044661U zeigt einen beweglichen Scanner, der über ein Kabel mit dem Einkaufswagen verbunden ist. Die DE 10 2017 104 407 A1 beschreibt eine Schiebegriffeinheit mit wenigstens einem ersten und einem zweiten Endstück. Die Dokumente GB 2522291 A und CN 108596736 A offenbaren Einkaufswägen mit Scanner zur Detektion von Waren.

Bei den Scannern für Einkaufswägen des Stands der Technik ist es stets erforderlich, dass eine aufwändige Umrüstung erfolgt, falls konventionelle Einkaufswägen mit einem Scanner ausgestattet werden sollen. Hierdurch sind für den Übergang von konventionellen Einkaufswägen zu Einkaufswägen mit Scanner hohe Kosten verbunden.

Eine Aufgabe der Erfindung ist es daher, eine Schiebegriffeinheit eines Einkaufswagens zur Verfügung zu stellen, mit dem ein Nachrüsten eines konventionellen Einkaufswagens schnell und günstig erfolgen kann.

Diese Aufgabe wird erfindungsgemäß durch eine Schiebegriffeinheit nach Anspruch 1 gelöst. Bevorzugte Ausführungsformen ergeben sich aus den abhängigen Ansprüchen.

Es wird eine Schiebegriffeinheit eines Einkaufswagens mit wenigstens einem ersten und einem zweiten Endstück zur Verfügung gestellt, wobei an zumindest einem Endstück eine freistehende, aufragende Greifeinheit angeordnet ist, wobei die Greifeinheit eine Objekthalterung zur Aufnahme einer Lupe zur Vergrößerung von Schrift auf einer Verpackung und ein Smartphone ausgebildet ist, wobei das Smartphone an die Objekthalterung anschließbar ist und damit als mobiler Scanner verwendbar ist.

Die Greifeinheit des Einkaufswagens dient dem komfortablen Greifen der Schiebegriffeinheit eines Einkaufswagens. Durch die Anordnung der Objekthalterung wird das komfortable Greifen der Schiebegriffeinheit nicht beeinträchtigt. Vorteilhafterweise können aber zusätzliche Objekte oder Funktionseinheiten an dem Einkaufswagen festgemacht werden und der Benutzer des Einkaufswagens muss diese daher nicht in der Hand halten. Eine Griffkappe dient dazu, die Aufnahme der Objekthalterung abzuschließen, falls die Objekthalterung nicht für beispielsweise eine Lupe oder einen Scanner benötigt werden.

Es wird ein Einkaufswagen mit einer Schiebegriffeinheit nach einem der Ansprüche 1 bis 6 zur Verfügung gestellt. Vorteilhafterweise kommuniziert der Scanner des Einkaufswagens bzw. der Schiebegriffeinheit mit einem Netzwerk eines Supermarkts bzw. eines Finanzdienstleisters, wodurch die Bezahlung der eingekauften Produkte automatisch erfolgen kann. Ein Einscannen an einer Kasse kann dadurch überflüssig gemacht werden.

Beispielhafte Ausführungsformen werden in den abhängigen Ansprüchen beschrieben. Vorteilhafterweise ist die Objekthalterung derart ausgebildet, dass ein Nachrüsten ermöglicht wird. Ist beispielsweise ein Einkaufswagen zunächst mit einer Lupe ausgestattet, kann die Lupe in einem Nachrüstvorgang durch einen Scanner ersetzt werden, wodurch sich prinzipiell das Einkaufen ohne ein Einscannen an einer zentralen Kasse ermöglicht wird. Gemäß einer beispielhaften Ausführungsform der Erfindung wird eine Schiebegriffeinheit zur Verfügung gestellt, wobei an dem Scanner eine Anzeigeeinheit zur Kenntlichmachung eines erfolgreichen Scanvorgangs, insbesondere durch einen Farbwechsel, angeordnet ist. Durch eine simple Kennzeichnung in einer farblichen Weise eines erfolgreichen Scanvorgangs kann eine einfache und effektive Kommunikation des Benutzers des Einkaufswagens mit dem Scanner erfolgen, wodurch der Scanvorgang effizient durchgeführt werden kann.

In einer weiteren erfindungsgemäßen Ausführungsform wird eine Schiebegriffeinheit zur Verfügung gestellt, wobei die Schiebegriffeinheit eine Leuchtanzeige aufweist, wobei die Leuchtanzeige in Art eines Pfeils ausgeformt ist, wobei der Pfeil in Richtung des Scanbereichs zeigend ausgebildet ist.

Vorteilhafterweise kann eine Leuchtanzeige an dem Einkaufswagen angeordnet werden, die zum einen beispielsweise durch einen Farbwechsel anzeigt, dass ein Scanvorgang erfolgreich durchgeführt wurde und zusätzlich derart ausgeformt ist, dass der Benutzer erkennen kann, wo der Scanbereich ist, das heißt, wohin er die zu scannende Verpackung bzw. das zu scannende Produkt hinhalten muss, damit der Scanvorgang erfolgen kann.

Gemäß einem weiteren Ausführungsbeispiel der vorliegenden Erfindung wird eine Schiebegriffeinheit zur Verfügung gestellt, wobei die Schiebegriffeinheit in einem ersten Zustand mit einer Lupe ausgebildet ist und in einem zweiten Zustand die Lupe durch einen Scanner ersetzbar ist bzw. ersetzt ist.

In einer weiteren erfindungsgemäßen Ausführungsform wird eine Schiebegriffeinheit zur Verfügung gestellt, wobei der Scanner zum Einkaufswagen weisend eine Leseeinheit aufweist, wodurch sich ein Scanbereich in Richtung des Einkaufswagens ergibt.

Gemäß einem weiteren Ausführungsbeispiel der vorliegenden Erfindung wird eine Schiebegriffeinheit zur Verfügung gestellt, wobei das Smartphone und der Scanner miteinander über WLAN oder Bluetooth verbunden sind.

Als eine Idee der Erfindung kann angesehen werden, das Scannen von Waren mit einem ortsfesten Scanner, der am Einkaufswagen angeordnet ist, zu ermöglichen. Der Scanvorgang kann alternativ durch das Smartphone des Benutzers erfolgen, falls sperrige oder schwere Waren, beispielsweise Waschmittelkartons, gescannt werden sollen. Die Scaneinheit am Einkaufswagen ist autonom und kann eine Anzeigeeinheit aufweisen. Die Anzeigeeinheit kann insbesondere dem Benutzer mitteilen, dass der Scanvorgang erfolgreich war. Der Scanner bzw. die Scaneinheit kann in einer Objekthalterung angeordnet werden, die alternativ zur Objekthalterung einer Lupe vorgesehen ist. Hierdurch können Einkaufswägen mit einer Lupenfunktion auf einen Scanner nachgerüstet werden. Ein weiterer Aspekt der Erfindung ist die Verbindung von Scanner am Einkaufswagen mit dem Smartphone bzw. Handy des Benutzers über WLAN bzw. Bluetooth, damit eine Kommunikation stattfinden kann.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

Weitere Einzelheiten und Vorteile der Erfindung werden anhand der in den Zeichnungen dargestellten Ausführungsbeispiele deutlich. Es zeigen
Fig. 1 ein System von Smartphone 2 und Scanner 1 an einem Einkaufswagen,
Fig. 2 einen Einscanvorgang, bei dem ein Scanner 1 eine Ware einscannt,
Fig. 3 einen Schiebegriffeinheit 5 eines Einkaufswagens mit einer Objekthalterung 6,
Fig. 4 einen Einkaufswagen 3 in einer perspektivischen Ansicht mit einer Objekthalterung 6 für eine Lupe oder für einen Scanner oder für ein Smartphone,
Fig. 5 den Einkaufswagen 3 in einer Seitenansicht mit Schiebegriffeinheit 5, an dem die Objekthalterung 6 integriert ist.
Fig. 6 den Einkaufswagen 3 von hinten mit dem Schiebegriffeinheit 5 und der Objekthalterung 6,
Fig. 7 eine Schiebegriffeinheit 5 eines Einkaufswagens mit einer Objekthalterung 6,
Fig. 8 eine Objekthalterung 6 für eine Lupe oder für einen Scanner, der zusätzlich für ein Smartphone oder ein Handy geeignet ist,
Fig. 9 die Objekthalterung 6, in der ein Smartphone 2 angeordnet ist,
Fig. 10 den erfindungsgemäßen Scanner 1 an einem Einkaufswagen,
Fig. 11 den Scanner 1 mit einer Leseeinheit 7,
Fig. 12 den Scanner 1 in einer Draufsicht,
Fig. 13 den Scanner 1,
Fig. 14 den Scanner 1 in einer Seitenansicht,
Fig. 15 einen Teil des Scanners 1 ohne oberes Gehäuse mit einer Darstellung der inneren Elemente des Scanners,
Fig. 16 den Teil des Scanners 1 in einer seitlichen Darstellung mit der Leseeinheit 7,
Fig. 17 den Teil des Scanners 1 mit einer perspektivischen Darstellung, der im Inneren angeordneten Elemente,
Fig. 18 die im Inneren angeordneten Elemente des Scanners 1 in einer Ansicht von oben,
Fig. 19 die im Inneren des Scanners 1 angeordneten Elemente in einer perspektivischen Ansicht von oben.

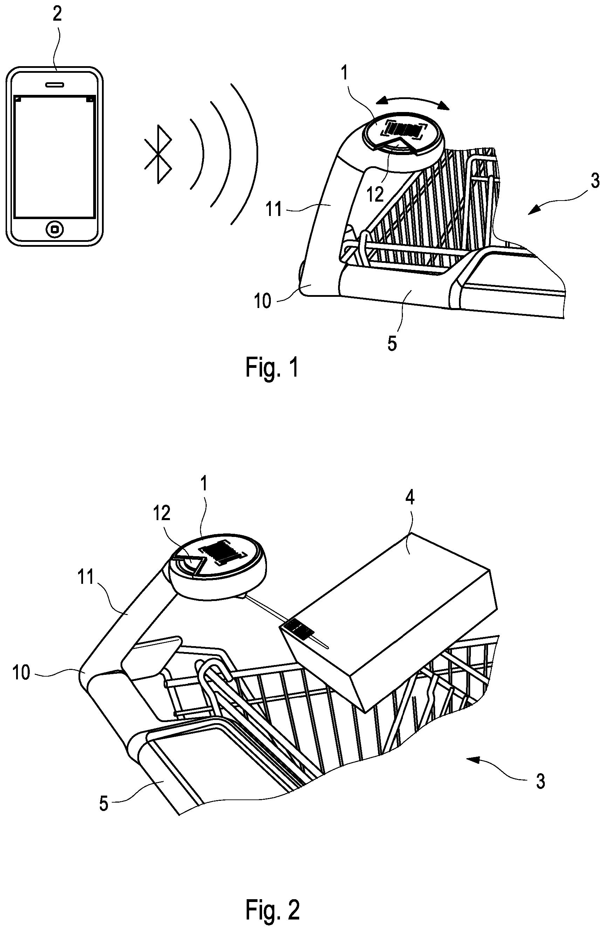

Fig. 1 zeigt einen Einkaufswagen 3 mit einem Scanner 1. Der Scanner 1 kann beispielsweise über eine Bluetooth-Verbindung mit einem Handy 2 kommunizieren. Hierbei kann insbesondere statt mit dem Scanner 1 mit dem Handy 2 ein einzelner Scanvorgang vorgenommen werden, da beispielsweise schwere Waren nur umständlich vor den Scanner 1 gehalten werden können. Außerdem kann auf dem Handy 2 eine Aufstellung der gekauften Waren erfolgen, damit der Benutzer die Übersicht über seine ausgewählten Waren behalten kann.

Fig. 2 zeigt den Scanner 1 beim Einscanvorgang einer Verpackung 4. Hierfür muss der Benutzer die Verpackung 4 vor den Scanner 1 halten, um einen Scanvorgang zu starten.

Der Scanner 1 kann eine Anzeigeeinheit 12 aufweisen, die beispielsweise durch Leuchtsignale einen erfolgreichen Scanvorgang anzeigen kann.

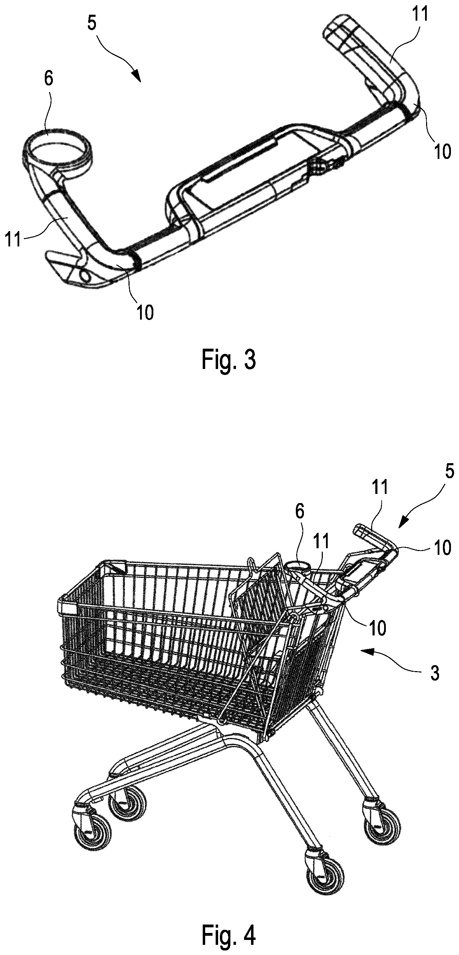

Fig. 3 zeigt einen Schiebegriffeinheit 5 eines Einkaufswagens mit einer Objekthalterung 6 für eine Lupe. Statt einer Lupe kann die Objekthalterung 6 einen Scanner aufnehmen.

Fig. 4 zeigt einen konventionellen Einkaufswagen 3 mit einer Schiebegriffeinheit 5, die eine Objekthalterung 6 für eine Lupe aufweist.

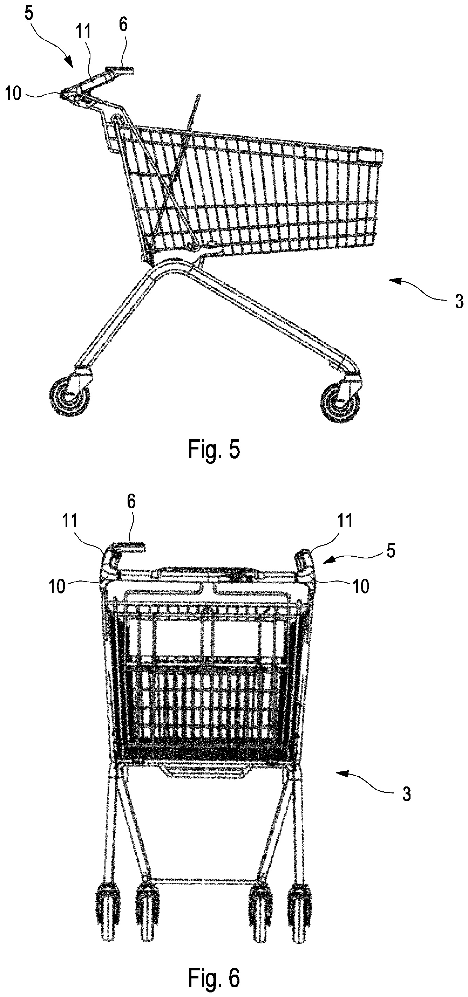

Fig. 5 zeigt den Einkaufswagen 3 mit der Objekthalterung 6 für eine Lupe. Die Lupe kann durch einen Scanner ersetzt werden, wodurch sehr schnell und kostengünstig eine Aufrüstung eines konventionellen Einkaufswagens 3 ohne Scaneinheit zu einem Einkaufswagen mit einem Scanner ermöglicht wird.

Fig. 6 zeigt den Einkaufswagen 3 mit der Schiebegriffeinheit 5, an dem die Objekthalterung 6 für eine Lupe oder alternativ für eine Scaneinheit angeordnet ist.

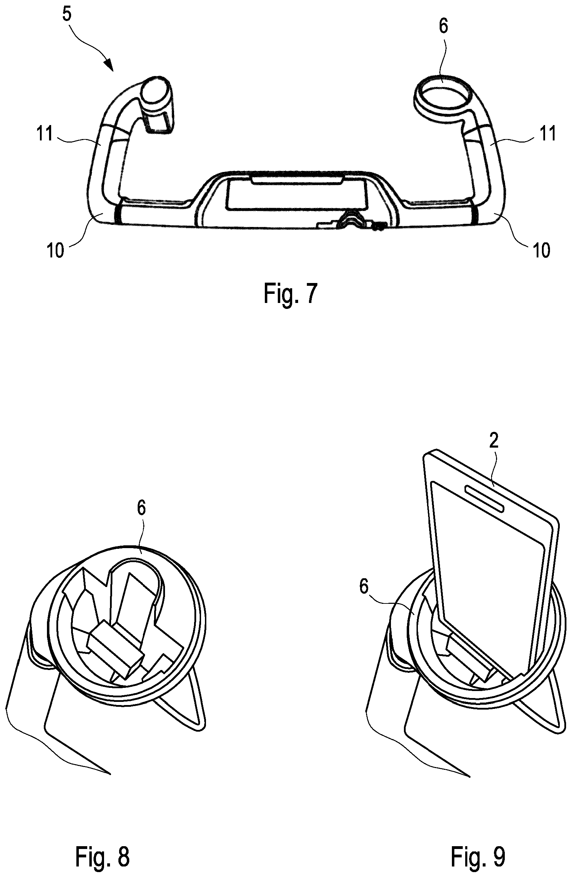

Fig. 7 zeigt eine Schiebegriffeinheit 5 eines Einkaufswagens, wobei auf der rechten Seite die Objekthalterung 6 für eine Lupe oder alternativ für einen Scanner angeordnet ist.

Fig. 8 zeigt die Objekthalterung 6 für eine Lupe oder alternativ für einen Scanner, wobei die Objekthalterung 6 derart ausgerüstet ist, dass ein Smartphone an die Objekthalterung 6 angeschlossen werden kann und damit als mobiler Scanner verwendet werden kann.

Fig. 9 zeigt ein Smartphone 2, das in der Objekthalterung 6 angeordnet ist.

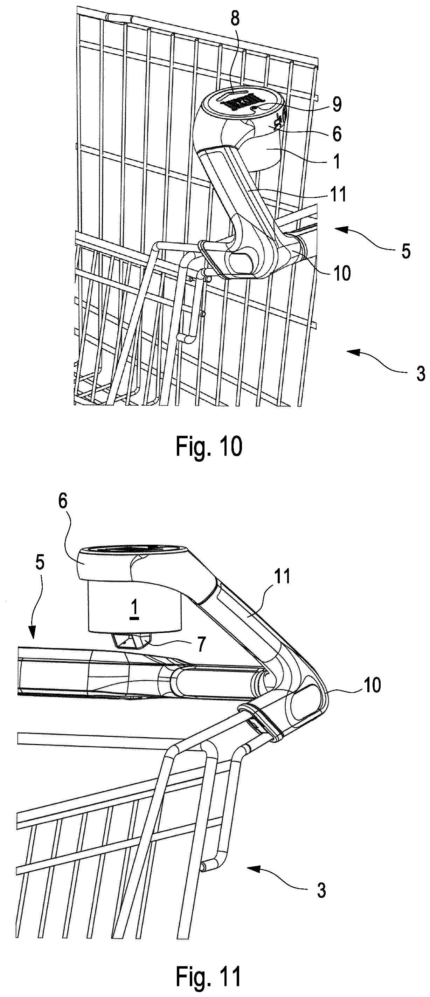

Fig. 10 zeigt einen Scanner 1, der an einem Einkaufswagen 3 angeordnet ist. Der Scanner 1 kann eine oder mehrere Anzeigeeinheiten 8 und 9 umfassen, die eine Kommunikation mit dem Benutzer erlauben. Beispielsweise kann eine Leuchtanzeige 8 angeordnet sein, die dauerhaft rot leuchtet und für eine gewisse Zeitspanne grün leuchtet, beispielsweise 2 bis 3 Sekunden, falls ein Scanvorgang erfolgreich erfolgte. Außerdem kann eine Leuchteinheit 9 vorhanden sein, die die Betriebsbereitschaft anzeigt. Der Scanner 1 ist aus der Objekthalterung 6 herausnehmbar ausgebildet, sodass statt dem Scanner 1 eine Lupe in die Objekthalterung 6 eingesetzt werden kann. Der Scanner 1 kann als 2D-Scanner zum Lesen von QR-Codes bzw. 1D Code EAN13 ausgebildet sein. Hierdurch soll auch ein Pairing ermöglicht werden, also ein Bonding, um in Computernetzwerken eine Verbindung zwischen Computergeräten herzustellen. Hierdurch wird die Kommunikation zwischen den Computergeräten ermöglicht. Es kann auch ein Pairing des Scanners 1 mit dem Mobiltelefon des Benutzers statt.

Der Scanner 1 kann in einer alternativen Ausführungsform eine Bewegung in seinem Scanbereich selbsttätig erkennen und startet dann den Scanvorgang. Die vom Scanner 1 eingelesenen Daten, also die Codes der Warenpackungen, werden beispielsweise über Bluetooth oder WLAN übertragen. Eine Übertragung kann an einen Server des Supermarkts bzw. Warenhauses erfolgen und/oder an das Handy bzw. das Smartphone des Benutzers. Der Scanner 1 umfasst einen Akku zur Spannungsversorgung.

Fig. 11 zeigt die Scanlösung am Einkaufswagen 3 mit dem Scanner 1 und der Leseeinheit 7.

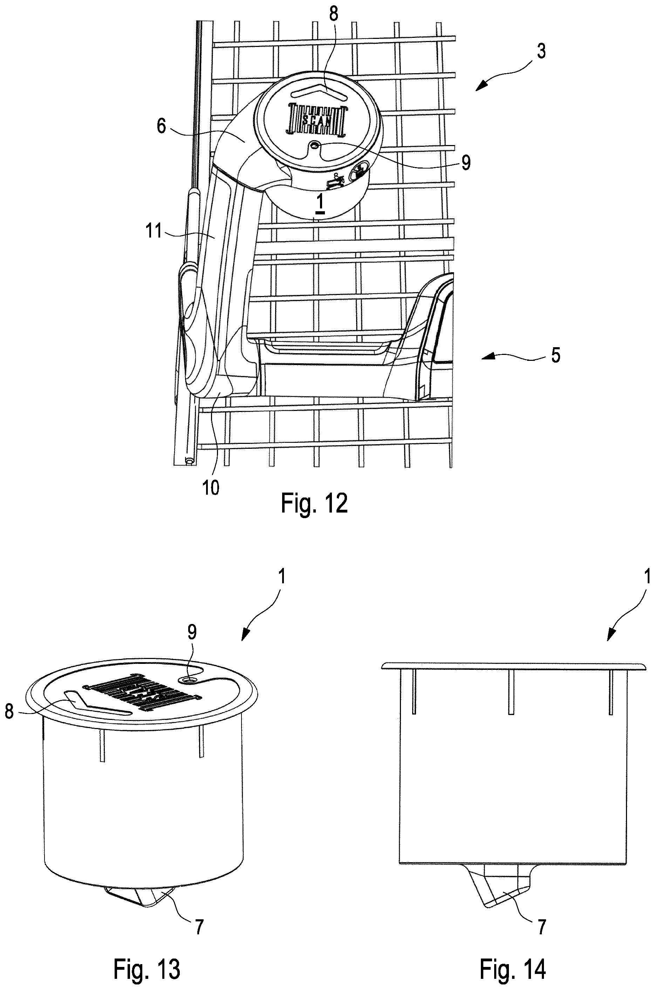

Fig. 12 zeigt die Scanlösung am Einkaufswagen 3 in einer Draufsicht mit dem Einkaufswagen 3 und dem Scanner 1, mit den Leuchtanzeigen 8 und 9. Die Leuchtanzeige 8 kann eine besondere Ausgestaltung aufweisen, beispielsweise als angedeuteter Pfeil, um dem Benutzer zu verdeutlichen, wie bzw. wo er eine einzuscannende Ware halten sollte, damit sie eingescannt werden kann.

Fig. 13 zeigt den Scanner 1 mit der Leseeinheit 7 und den Leuchtanzeigen 8 und 9 in einer perspektivischen Darstellung.

Fig. 14 zeigt den Scanner 1 in einer seitlichen Darstellung.

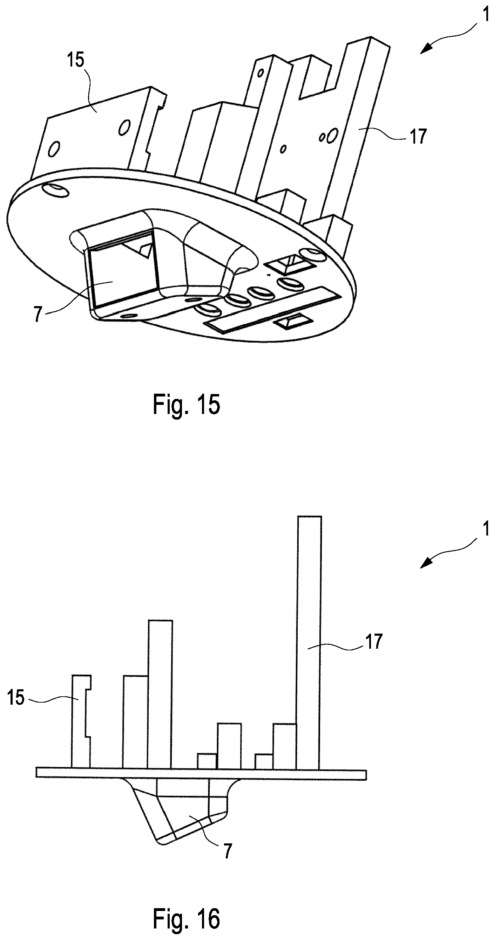

Fig. 15 zeigt einen Teil des Scanners 1 mit der Leseeinheit 7.

Fig. 16 zeigt den Teil des Scanners 1 mit der Leseeinheit 7, wobei außerdem schematisch die LED-Platine 15 und der Accumulator 17, also der Energiespeicher, dargestellt sind.

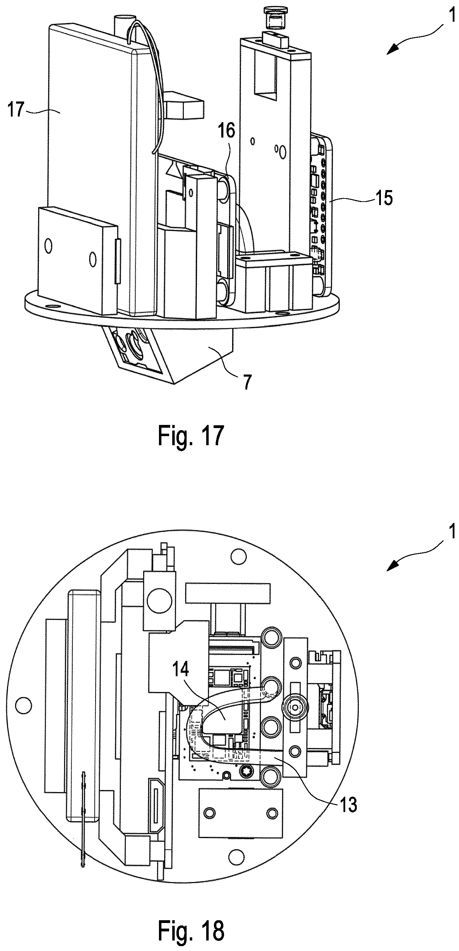

Fig. 17 zeigt den Teil des Scanners 1 mit der Leseeinheit 7 in einer seitlichen perspektivischen Darstellung. Außerdem sind schematisch die LED-Platine 15, der Akku 17 und die Platine zum Lademanagement des Akkus 16 dargestellt.

Fig. 18 zeigt den Teil des Scanners 1 in einer Ansicht von oben, wobei außerdem ein Lichtbandleiter 13 und ein Mini-PC 14 abgebildet sind.

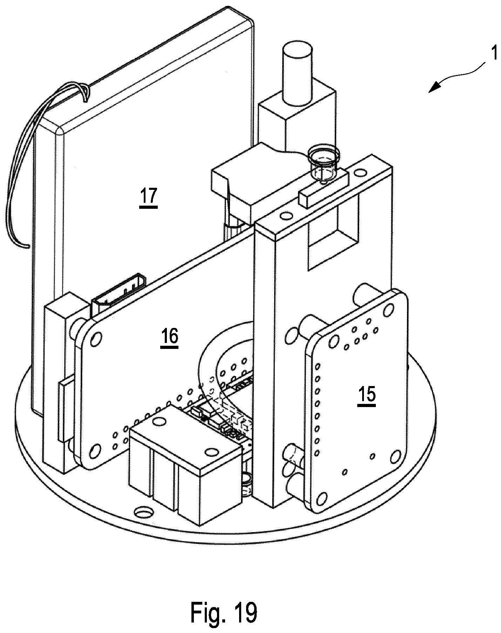

Fig. 19 zeigt den Teil des Scanners 1 in einer perspektivischen Ansicht von oben. Zusätzlich sind der Accu 17, die Platine zum Lademanagement des Accus 16 und die LED-Platine 15 abgebildet.

In einer weiterführenden Ausführungsform ist der Scanner gerade nach vorne abgehend. Eine Neigung ist hierbei nicht notwendig.

Die Form dieser weiterführenden Ausführungsform ist weitestgehend zylinderförmig. Der Scanner ist hierbei insbesondere aus zwei abgestuften zylindrischen Abschnitten gebildet, die übereinander angeordnet sind. Der obere Abschnitt weist ca. einen Durchmesser von ca. 90 mm auf, der untere Abschnitt einen Durchmesser von ca. 76 mm. Die gesamte Höhe des Scanners beträgt hierbei ca. 45 mm. Die Höhe des unteren Abschnitts weist eine Höhe von ca. 25 mm auf, der obere Abschnitt hat somit eine Höhe von ca. 20 mm. Diese flachere Ausführung ist vorteilhafter und findet einen verbesserten Einsatz.

Im Bereich der eigentlichen Leseeinheit ist der Scanner nicht kreisförmig, sondern gerade ausgeführt. Der Scanner kann somit gerade nach vorne eingesetzt werden. Dies ist bedienungsfreundlicher.

Eine Riffelung der Oberfläche insbesondere an den zylindrischen Seitenwänden ist vorteilhaft. Insbesondere im oberen Abschnitt ist symmetrisch eine Riffelung in kurzen Abständen vorgesehen. Der Abstand der vorzugsweisen ebenfalls symmetrischen Riffelung im unteren Abschnitt des Scanners weist größere Abstände zwischen einzelnen Erhöhungen auf. Durch diese Riffelungen kann der Scanner am Wagen besser gedreht werden.

Weiterhin findet ein Akku Einsatz, der eine verlängerte Lebensdauer aufweist. Eine Laufzeit von bis zu ca. 9 Stunden ist möglich.

Für die LED-Anzeige der Scanner-Zustände hat sich die folgende Farbauswahl als vorteilhaft erwiesen:
- Blau: Grundzustand, bereit für die Verbindung mit einem Sender z.B. einem mobilen Telefon,
- Blau blinkend: die Datenverbindung zum Sender wird hergestellt,
- Grün: die Verbindung ist hergestellt,
- Grün blinkend: die Daten sind gescannt,
- Rot oder Rot blinkend: die Akkuleistung ist schwach.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 1: Scanner
- 2: Smartphone, Handy
- 3: Einkaufswagen bzw. Transportwagen
- 4: zu kaufende Ware, bzw. eine Verpackung eines Produkts
- 5: Schiebegriffeinheit eines Einkaufswagens
- 6: Objekthalterung für eine Lupe
- 7: Leseeinheit
- 8: Leuchtanzeige
- 9: Leuchtanzeige
- 10: Endstück
- 11: Greifeinheit
- 12: Anzeigeeinheit
- 13: Lichtbandleiter
- 14: Mini-PC
- 15: LED-Platine
- 16: Platine zum Lademanagement des Akkus
- 17: Akku

## Patentansprüche

1. Schiebegriffeinheit (5) eines Einkaufswagens (3) mit wenigstens einem ersten und einem zweiten Endstück (10), wobei an zumindest einem Endstück (10) eine freistehende, aufragende Greifeinheit (11) angeordnet ist, wobei die Greifeinheit (11) als eine Objekthalterung (6) zur Aufnahme einer Lupe zur Vergrößerung von Schrift auf einer Verpackung und zur Aufnahme für ein Smartphone (2) ausgebildet ist, **dadurch gekennzeichnet, dass** die Objekthalterung derart ausgebildet ist, dass das Smartphone (2) an die Objekthalterung (6) anschließbar ist und damit als mobiler Scanner verwendbar ist.

2. Schiebegriffeinheit (5) nach Anspruch 1, wobei an dem Scanner (1) eine Anzeigeeinheit (12) zur Kenntlichmachung eines erfolgreichen Scanvorgangs, insbesondere durch einen Farbwechsel, angeordnet ist.

3. Schiebegriffeinheit (5) nach Anspruch 2, wobei die Schiebegriffeinheit eine Leuchtanzeige (8) aufweist, wobei die Leuchtanzeige (8) in Art eines Pfeils ausgeformt ist, wobei der Pfeil in Richtung des Scanbereichs zeigend ausgebildet ist.

4. Schiebegriffeinheit (5) nach einem der vorhergehenden Ansprüche, wobei die Schiebegriffeinheit (5) in einem ersten Zustand mit einer Lupe ausgebildet ist und in einem zweiten Zustand die Lupe durch einen Scanner (1) ersetzbar ist bzw. ersetzt ist.

5. Schiebegriffeinheit (5) nach einem der vorhergehenden Ansprüche, wobei der Scanner (1) zum Einkaufswagen (3) weisend eine Leseeinheit (7) aufweist, wodurch sich ein Scanbereich in Richtung des Einkaufswagens (3) ergibt.

6. Schiebegriffeinheit (5) nach einem der vorhergehenden Ansprüche, wobei das Smartphone (2) und der Scanner (1) miteinander über WLAN oder Bluetooth verbunden sind.

7. Einkaufswagen (3) mit einer Schiebegriffeinheit (5) nach einem der vorhergehenden Ansprüche.

## Claims

1. Push handle unit (5) of a shopping cart (3) having at least one first and one second end piece (10), wherein a free-standing, upwardly projecting gripping unit (11) is arranged on at least one end piece (10), wherein the gripping unit (11) is configured as an object holder (6) for receiving a magnifying glass for magnifying text on a packaging and for receiving a smartphone (2), **characterized in that** the object holder is configured such that the smartphone (2) is connectable to the object holder (6) and is thus usable as a mobile scanner.

2. Push handle unit (5) according to Claim 1, wherein a display unit (12) for identifying a successful scanning process, in particular by way of a color change, is arranged on the scanner (1).

3. Push handle unit (5) according to Claim 2, wherein the push handle unit comprises a luminous display (8), wherein the luminous display (8) is shaped in the manner of an arrow, wherein the arrow is configured so as to be pointing in the direction of the scanning region.

4. Push handle unit (5) according to any of the preceding claims, wherein the push handle unit (5) is configured with a magnifying glass in a first state and the magnifying glass is replaceable or is replaced by a scanner (1) in a second state.

5. Push handle unit (5) according to any of the preceding claims, wherein the scanner (1) comprises a reading unit (7) facing toward the shopping cart (3), thus resulting in a scanning region in the direction of the shopping cart (3).

6. Push handle unit (5) according to any of the preceding claims, wherein the smartphone (2) and the scanner (1) are connected to one another via WLAN or Bluetooth.

7. Shopping cart (3) having a push handle unit (5) according to any of the preceding claims.

## Revendications

1. Unité formant poignée de poussée (5) d'un chariot de supermarché (3), laquelle comporte au moins une première et une deuxième parties d'extrémité (10), une unité de préhension (11) autonome et saillante étant disposée sur au moins une partie d'extrémité (10), l'unité formant poignée (11) étant conçue comme un porte-objet (6) destiné à maintenir une loupe destinée à agrandir un texte écrit sur un emballage et à recevoir un Smartphone (2), **caractérisée en ce que** le porte-objet est conçu de telle sorte que le Smartphone (2) puisse être raccordé au porte-objet (6) et puisse donc être utilisé comme scanneur mobile.

2. Unité formant poignée de poussée (5) selon la revendication 1, une unité d'affichage (12) étant disposée sur le scanneur (1) pour indiquer un processus de scannage réussi, notamment par un changement de couleur.

3. Unité formant poignée de poussée (5) selon la revendication 2, l'unité formant poignée de poussée comportant un affichage lumineux (8), l'affichage lumineux (8) étant formé à la manière d'une flèche, la flèche étant conçue pour pointer en direction de la zone de scannage.

4. Unité formant poignée de poussée (5) selon l'une des revendications précédentes, l'unité formant poignée de poussée (5) étant conçue avec une loupe dans un premier état et dans un deuxième état la loupe pouvant être remplacée ou étant remplacée par un scanneur (1).

5. Unité formant poignée de poussée (5) selon l'une des revendications précédentes, le scanneur (1) comportant une unité de lecture (7) tournée vers le chariot de supermarché (3), d'où il résulte une zone de scannage en direction du chariot de supermarché (3).

6. Unité formant poignée de poussée (5) selon l'une des revendications précédentes, le Smartphone (2) et le scanneur (1) étant reliés entre eux par WLAN ou Bluetooth.

7. Chariot de supermarché (3) comprenant une unité formant poignée de poussée (5) selon l'une des revendications précédentes.
